# EUROPEAN PATENT APPLICATION

(11) **EP 3 705 540 A1**
(43) Date of publication of application: **09.09.2020**
(21) Application number: 20153343.7
(22) Date of filing: 23.01.2020
(51) Int. Cl.: C09D 11/101, C09D 11/38

(54) **ACTIVE RAY-CURABLE INK FOR INK JET AND IMAGE FORMING METHOD**

(30) Priority: 08.03.2019 JP 2019042424
(71) Applicant: KONICA MINOLTA, INC., Tokyo 100-7015 (JP)
(72) Inventor: Kurogi, Yusuke, Tokyo, 100-7015 (JP); Toeda, Takayuki, Tokyo, 100-7015 (JP)
(74) Representative: Hoffmann Eitle

(57) **Abstract**

Providing an active ray-curable ink for ink jet having an excellent curing sensitivity even with a small amount of initiator.

The active ray-curable ink for ink jet according to the present invention includes: a compound (A); a compound (B) having a thioxanthone skeleton; a compound (C) having a triplet energy level (T₃) between a triplet energy level (T₁) of the compound (A) represented by the structural formula (1) and a triplet energy level (T₂) of the compound (B) having a thioxanthone skeleton; a two or more functional radical polymerizable active ray-curable compound; and a coloring material. The total content of the compound (A) and the compound (B) having a thioxanthone skeleton is 0.1 mass% or more and less than 5.0 mass% with respect to the total mass of the active ray-curable ink for ink jet.

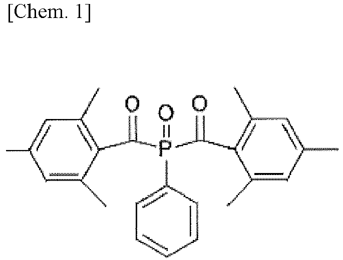

## Description

### Background

### Technological Field

The present invention relates to an active ray-curable ink for ink jet and an image forming method.

### Description of the Related art

An image forming method using an ink jet system is used in various fields of printing because an image can be produced easily and at a low cost. As a sort of ink for ink jet, an ink containing an active ray-curable compound, which can be cured by irradiation with active rays, and a polymerization initiator (hereinafter, sometimes simply referred to as an "active ray-curable ink") is known. When a droplet of an active ray-curable ink is adhered to the surface of a recording medium and the adhered droplet is irradiated with active rays, a cured film which is formed by curing of the ink is formed on the surface of the recording medium. By repeating the formation of such a cured film, a desired image can be formed.

As the above-described active ray-curable compound, a radical polymerizable compound and a cationic polymerizable compound are mainly used. As the above-described photopolymerization initiator, types of compounds corresponding to types of the active ray-curable compounds are used. Specifically, a radical polymerization initiator, which can produce radicals by irradiation with active rays, is used for a radical polymerizable compound, and a photo-acid-generating agent, which can produce acids by irradiation with active rays, is used for a cationic polymerizable compound. Further, as described, for example, in JP 2012-214782 A and JP 2013-224364 A, two or more kinds of radical polymerization initiators may be sometimes included in ink.

JP 2012-214782 A discloses, for example, an active energy ray-curable ink containing three or more kinds of photopolymerization initiators selected from an α-amino alkylphenone compound, an acylphosphine oxide compound, a thioxanthone compound, and a benzophenone compound. JP 2012-214782 A suggests that since the above-described active energy ray-curable ink contains three or more kinds of photopolymerization initiators which absorb light with wavelength of 365 nm, the active energy ray-curable ink is favorably cured by irradiation with ultraviolet rays from a light source which emits ultraviolet rays with wavelengths of 200 to 420 nm or a light emitting diode (UV-LED) which emits ultraviolet rays with wavelengths in a range of 350 to 420 nm.

JP 2013-224364 A discloses an active energy ray-curable inkjet ink containing two or more kinds of compounds as initiators and sensitizers. JP 2013-224364 A suggests that, by making the amounts of initiators and sensitizers contained in the active energy ray-curable inkjet ink fall within a range of 7 to 25 mass% of the ink to increase curing rate of the ink, when printing is performed by forming multiple layers of ink by single-pass printing, insufficient curing of ink of the inner part of the layered ink can be reduced.

JP 2011-068783 A discloses an ink composition containing a monofunctional monomer, which includes an acrylate monomer, and a photopolymerization initiator, and the content of the monofunctional monomer is 30 to 90 wt%. JP 2011-068783 A suggests that the above-described ink composition can be cured by a low-level exposure because the ink composition contains a hydrogen abstraction-type photopolymerization initiator which absorbs light with wavelengths including 365 nm, and a hydrogen-source acrylate monomer which has a hydrogen atom on an alpha atom with respect to an ether oxygen atom.

However, in an active energy ray-curable ink described in JP 2012-214782 A, the active energy ray-curable ink contains a large amount (i.e., 20 wt%) of a pigment. Thus, when the ink is irradiated with an active energy ray, the pigment contained in the ink absorbs the active energy ray. Accordingly, the active energy ray-curable ink described in JP 2012-214782 A may cause migration because a large amount of unreacted initiator may be left in a cured ink.

Further, in an active energy ray-curable inkjet ink described in JP 2013-224364 A, the inkjet ink contains large amounts (i.e., 7 to 25 mass% of the ink) of initiators and sensitizers, and thus may cause migration because a large amount of the unreacted initiators may be left in a cured film. The migration can be suppressed by reducing the amount of the photopolymerization initiator contained in the active ray-curable ink for ink jet. However, when the mount of the photopolymerization initiator becomes lower, the curing sensitivity of the ink also decreases.

Further, in an ink composition described in JP 2011-068783 A, since the ink composition contains a large amount (i.e., 30 to 90 wt%) of a monofunctional monomer including an acrylate monomer, it is difficult to achieve desired curing properties. Thus, the amount of a photopolymerization initiator should be increased. Accordingly, the ink composition described in JP 2011-068783 A may cause migration because a large amount of the unreacted initiator may be left in a cured ink.

### Summary

A first object of the present invention, which has been made under the above circumstances, is to provide an active ray-curable ink for ink jet which leads to suppressed migration and has an excellent curing sensitivity. A second object of the present invention is to provide an image forming method using the above-described active ray-curable ink for ink jet.

To achieve at least one of the abovementioned objects, according to an aspect of the present invention, an active ray-curable ink for ink jet reflecting one aspect of the present invention comprises: a compound (A) represented by the structural formula (1): 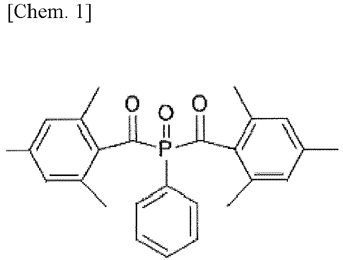 a compound (B) having a thioxanthone skeleton; a compound (C) having a triplet energy level (T₃) between a triplet energy level (T₁) of the compound (A) represented by the structural formula (1) and a triplet energy level (T₂) of the compound (B) having a thioxanthone skeleton; a two or more functional radical polymerizable active ray-curable compound; and a coloring material, wherein a content of the two or more functional radical polymerizable active ray-curable compound is 50.0 mass% or more with respect to the total mass of the active ray-curable ink for ink jet, a content of the coloring material is 0.1 mass% or more and 15.0 mass% or less with respect to the total mass of the active ray-curable ink for ink jet, and the total content of the compound (A) represented by the structural formula (1) and the compound (B) having a thioxanthone skeleton is 0.1 mass% or more and less than 5.0 mass% with respect to the total mass of the active ray-curable ink for ink jet.

### Brief Description of the Drawings

The advantages and features provided by one or more embodiments of the invention will become more fully understood from the detailed description given hereinbelow and the appended drawings which are given by way of illustration only, and thus are not intended as a definition of the limits of the present invention:

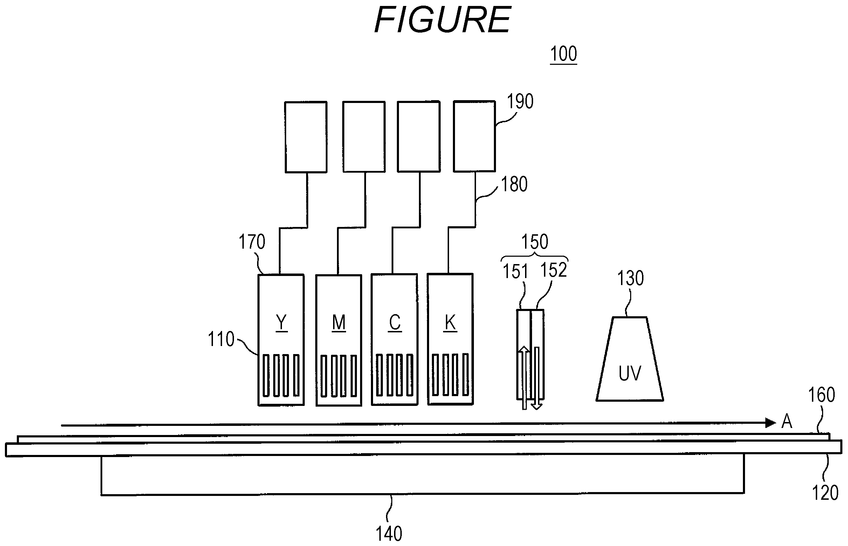

Fig. 1 is a schematic illustration showing an example of a configuration of an image forming apparatus according to an embodiment of the present invention.

### Detailed Description of Embodiments

Hereinafter, one or more embodiments of the present invention will be described with reference to the drawings. However, the scope of the invention is not limited to the disclosed embodiments.

### 1. Active Ray-curable Ink

An active ray-curable ink for ink jet according to an embodiment of the present invention relates to an active ray-curable ink for ink jet including a compound (A) represented by the structural formula (1); a compound (B) having a thioxanthone skeleton; a compound (C) having a triplet energy level (T₃) between the triplet energy level (T₁) of the compound (A) represented by the structural formula (1) and the triplet energy level (T₂) of the compound (B) having a thioxanthone skeleton; a two or more functional active ray-curable compound; and a coloring material.

### 1-1. Compound (A)

The compound (A) is bis(2,4,6-trimethylbenzoyl)phosphine oxide represented by the structural formula (1) (triplet energy level (T₁): 55.5 kcal/mol). Specific examples of the compound (A) as a commercially available product include Irgacure 819 manufactured by BASF. "Irgacure" is a registered trademark of BASF SE.

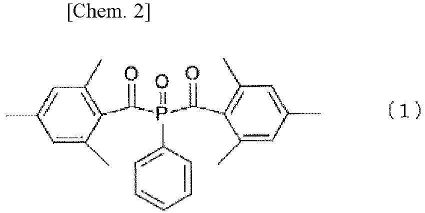

The above-described compound (A) represented by the structural formula (1) produces a radical by irradiation with active rays, and acts as a radical polymerization initiator for the active ray-curable ink. Examples of the active rays include electron rays, ultraviolet rays, alpha rays, gamma rays, and X rays. Among the active rays, ultraviolet rays or electron rays are preferred.

The content of the above-described compound (A) represented by the structural formula (1) is preferably 0.01 mass% or more and less than 5.0 mass% with respect to the total mass of the active ray-curable ink, and more preferably 0.1 mass% or more and less than 3.5 mass%.

### 1-2. Compound (B) having Thioxanthone Skeleton

The above-described compound (B) having a thioxanthone skeleton produces a radical with irradiation with active rays, and acts as a radical polymerization initiator for the active ray-curable ink.

The above-described compound (B) having a thioxanthone skeleton has properties of having a high sensitivity, and absorbing light to transit to a higher energy level. Thus, when the compound (B) having a thioxanthone skeleton itself absorbs light to transit to a higher energy level, the compound (B) transfers the energy to the compound (A) represented by the structural formula (1), which has a sensitivity that is lower than that of the compound (B), and elevates the energy level of the compound (A) represented by the structural formula (1). Thus, production of a radical by the compound (A) represented by the structural formula (1) can be facilitated. Accordingly, the compound (B) having a thioxanthone skeleton can increase the amount of radical production in the active ray-curable ink which is irradiated with active rays, and can increase the curing sensitivity of the ink.

Examples of the compound (B) having a thioxanthone skeleton include 2-isopropylthioxanthone, 4-isopropylthioxanthone, 2,4-dimethylthioxanthone, 2,4-diethylthioxanthone, 2-dodecylthioxanthone, 2,3-diethylthioxanthone, 2,4-diethylthioxanthone, 2,4-dimethylthioxanthone, 2-cyclohexylthioxanthone, 4-cyclohexylthioxanthone, 2-chlorothioxanthone, 2,4-dichloro thioxanthone, and 1-chloro-4-propoxythioxanthone.

From the viewpoint of further increasing the curing sensitivity of the active ray-curable ink, the compound (B) having a thioxanthone skeleton is preferably a compound represented by the following structural formula (2).

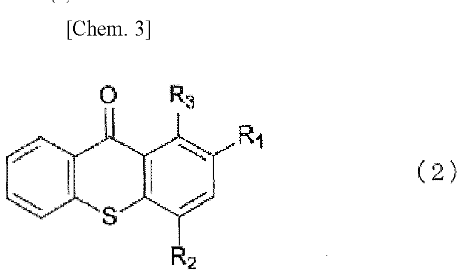

In the formula (2), R₁, R₂, and R₃ are substituents each independently selected from the group consisting of a hydrogen atom, an optionally branched C₁-C₃ alkyl group, a C₁-C₃ alkoxy group in which the carbon chain is optionally branched, and a halogen atom. With the proviso, however, that at least one of R₁, R₂, and R₃ is a hydrogen atom, and at least one of the others is a substituent other than a hydrogen atom.

The above-described compound (B) having a thioxanthone skeleton is preferably 2-isopropylthioxanthone (2-ITX) represented by the following structural formula (3) (triplet energy level (T₂): 61.4 kcal/mol), 4-isopropylthioxanthone (4-ITX) represented by the following structural formula (4) (triplet energy level (T₂): 61.4 kcal/mol), 2-chlorothioxanthone (CTX) represented by the following structural formula (5) (triplet energy level (T₂): 63.3 kcal/mol), or 1-chloro-4-propoxythioxanthone (CPTX) represented by the following structural formula (6) (triplet energy level (T₂): 60.3 kcal/mol). Among these, 2-ITX and 4-ITX may be used as a mixture of 2-ITX and 4-ITX (triplet energy level (T₂): 61.4 kcal/mol).

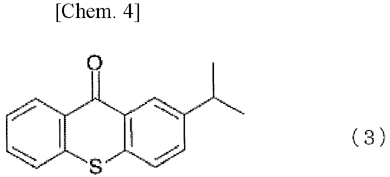

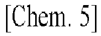

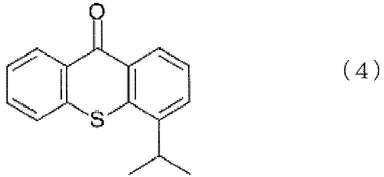

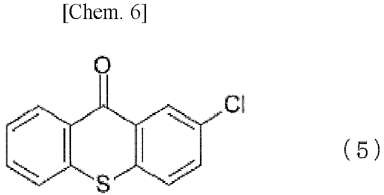

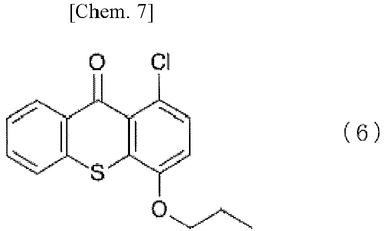

The content of the above-described compound (B) having a thioxanthone skeleton is preferably 0.01 mass% or more and less than 5.0 mass% with respect to the total mass of the active ray-curable ink, and more preferably 0.1 mass% or more and less than 3.0 mass%.

In the active ray-curable ink according to the present invention, the total content of the above-described compound (A) represented by the structural formula (1) and the above-described compound (B) having a thioxanthone skeleton is preferably 0.1 mass% or more and less than 5.0 mass% with respect to the total mass of the active ray-curable ink. When the total amount of the compound (A) represented by the structural formula (1) and the compound (B) having a thioxanthone skeleton is 0.1 mass% or more, the ink can be sufficiently cured by irradiation with active rays. When the total amount of the compound (A) represented by the structural formula (1) and the compound (B) having a thioxanthone skeleton is less than 5.0 mass%, the amount of unreacted portions of the compound (A) represented by the structural formula (1) and the compound (B) having a thioxanthone skeleton can be reduced, and therefore migration of the residual portion of the compounds can be suppressed.

### 1-3. Compound (C)

The above-described compound (C) is a compound having a triplet energy level (T₃) between the triplet energy level (T₁) of the compound (A) represented by the structural formula (1) and the triplet energy level (T₂) of the compound (B) having a thioxanthone skeleton.

The above-described compound (A) represented by the structural formula (1) and the above-described compound (B) having a thioxanthone skeleton each undergo excitation from a ground state up to an excited singlet state (S₁) by absorption of light, and thereafter transition to an excited triplet state (S₂) by intersystem crossing occurs. The compound (A) represented by the structural formula (1) and the compound (B) having a thioxanthone skeleton in the excited triplet states (S₂) can produce radicals.

However, there is a large difference between the triplet energy level of the compound (B) having a thioxanthone skeleton and the triplet energy level of the compound (A) represented by the structural formula (1), and therefore energy transfer is relatively difficult to occur. On the contrary, the compound (C) has a triplet energy level (T₃) between the triplet energy level (T₂) of the compound (B) having a thioxanthone skeleton and the triplet energy level (T₁) of the compound (A) represented by the structural formula (1), and therefore the energy level of the compound (C) can be elevated by energy transfer from the compound (B) having a thioxanthone skeleton, and thereafter the compound (C) can transfer the energy to the compound (A) represented by the structural formula (1) to elevate the energy level of the compound (A) represented by the structural formula (1). Accordingly, the compound (C) can facilitate the energy transfer from the compound (B) having a thioxanthone skeleton to the compound (A) represented by the structural formula (1), and promote radical production by the compound (A) represented by the structural formula (1), and increase the curing properties of an active ray-curable ink.

Examples of the compound (C) include 2-benzyl-2-dimethylamino-1-(4-morpholinophenyl)-butanone, 2-methyl-2-morpholino(4-methylthiophenyl)propane-1-one, 2,4,6-trimethylbenzoyldiphenylphosphine oxide, 4-phenylbenzophenone, and 4-(4'-methylphenylthio)benzophenone.

Specific examples of the compound (C) as a commercially available product include Irgacure 369 (T₃: 60.0 kcal/mol), Irgacure 907 (triplet energy level (T₃): 61.0 kcal/mol), and Irgacure TPO (triplet energy level (T₃): 60.0 kcal/mol) manufactured by BASF; and Speedcure PBZ (T₃: 60.7 kcal/mol) and Speedcure BMS (triplet energy level (T₃): 61.0 kcal/mol) manufactured by Lambson. "Speedcure" is a registered trademark of Lambson.

Among the compounds (C), 4-phenylbenzophenone and 4-(4'-methylphenylthio)benzophenone are preferred. 4-phenylbenzophenone and 4-(4'-methylphenylthio)benzophenone do not absorb light with wavelengths around 385 nm. Thus, when the compounds are irradiated with ultraviolet rays as active rays, 4-phenylbenzophenone and 4-(4'-methylphenylthio)benzophenone are not excited and decomposed, and therefore energy transfer from the compound (B) having a thioxanthone skeleton to the compound (A) represented by the structural formula (1) can favorably occur.

The content of the compound (C) is 0.01 mass% or more and 1.0 mass% or less with respect to the total mass of the active ray-curable ink, and preferably 0.1 mass% or more and 0.5 mass% or less. When the content of the compound (C) is 0.01 mass% or more, energy transfer from the compound (B) having a thioxanthone skeleton to the compound (A) represented by the structural formula (1) can adequately occur, and the sensitivity of an active light ray curable ink can be sufficiently increased. When the content of the compound (C) is 0.5 mass% or less, migration of the compound (C) from a cured film can be suppressed.

Herein, a triplet energy level (T₁) of the compound (A) represented by the structural formula (1), a triplet energy level (T₂) of the compound (B) having a thioxanthone skeleton, and a triplet energy level (T₃) of the compound (C) can be calculated by the following formula. In the following formula, X represents an excited triplet energy (eV), and Y represents a 0-0 band (nm) of phosphorescence.

Formula: X = 1239.8/Y

The 0-0 band (nm) of phosphorescence can be obtained as follows.

A host compound to be measured is dissolved in a sufficiently deoxidized mixed solvent of ethanol/methanol = 4/1(vol/vol), placed in a phosphorescence measurement cell, thereafter irradiated with excitation light at liquid nitrogen temperature 77 K, and an emission spectrum at 100 ms after the irradiation with the excitation light is measured. The duration of light emission by phosphorescence is longer than that by fluorescence, and it is thought that almost all light that remains after 100 ms is due to phosphorescence. With respect to a compound which is insoluble in the above-described mixed solvent, any solvent that can dissolve the compound may be used.

Herein, a shortest maximal wavelength of light emission among maximal wavelengths in the phosphorescence spectrum chart obtained by the above-described measurement method is defined as a 0-0 band.

Generally, since most phosphorescence spectrum has a low intensity, when the phosphorescence spectrum is enlarged, it may be difficult to distinguish a peak from noises. Then, a maximal wavelength of light emission can be easily determined by enlarging a fixed-light spectrum, overlapping the enlarged fixed-light spectrum with an emission spectrum at 100 ms after irradiation with excitation light, and reading a peak wavelength from a fixed-light spectrum portion derived from a phosphorescence spectrum. Also, a peak can be distinguished from noises by smoothing processing of the phosphorescence spectrum, and a maximal wavelength of light emission can be read. As smoothing processing, the Savitzky-Golay smoothing or the like can be used.

### 1-4. Radical Polymerizable Active Ray-curable Compound

The above-described radical polymerizable active ray-curable compound is a compound which can be crosslinked or polymerized by a radical which is produced by the compound (A) represented by the structural formula (1), the compound (B) having a thioxanthone skeleton, or the like.

The content of the radical polymerizable active ray-curable compound is preferably, for example, 50.0 mass% or more and 97.0 mass% or less with respect to the total mass of the ink.

The radical polymerizable active ray-curable compounds contained in the active ray-curable ink may be used alone, or in combination of two or more. The radical polymerizable active ray-curable compounds may be any of a monomer, a polymerizable oligomer, a prepolymer, and a mixture thereof.

Herein, the radical polymerizable active ray-curable compound refers to a compound having an ethylenically unsaturated double bond group in the molecule. The radical polymerizable active ray-curable compound may be a monofunctional or a two or more functional compound. Examples of the radical polymerizable active ray-curable compound include a (meth)acrylate, which is an unsaturated carboxylic acid ester compound. Herein, a "(meth)acrylate" refers to an acrylate or a methacrylate, a "(meth)acryloyl group" refers to an acryloyl group or a methacryloyl group, and " (meth)acryl" refers to acryl or methacryl.

Examples of the monofunctional (meth)acrylate include isoamyl (meth)acrylate, stearyl (meth)acrylate, lauryl (meth)acrylate, octyl (meth)acrylate, decyl (meth)acrylate, isomyristyl (meth)acrylate, isostearyl (meth)acrylate, 2-ethylhexyl-diglycol (meth)acrylate, 2-hydroxybutyl (meth)acrylate, 2-(meth)acryloyloxyethyl hexahydrophthalate, butoxyethyl (meth)acrylate, ethoxydiethylene glycol (meth)acrylate, methoxydiethylene glycol (meth)acrylate, methoxypolyethylene glycol (meth)acrylate, methoxypropylene glycol (meth)acrylate, phenoxyethyl (meth)acrylate, tetrahydrofurfuryl (meth)acrylate, isobornyl (meth)acrylate, 2-hydroxyethyl (meth)acrylate, 2-hydroxypropyl (meth)acrylate, 2-hydroxy-3-phenoxypropyl (meth)acrylate, 2-(meth)acryloyloxyethyl succinate, 2-(meth)acryloyloxyethyl phthalate, 2-(meth)acryloyloxyethyl-2-hydroxyethyl phthalate, and t-butylcyclohexyl (meth)acrylate.

Examples of the two or more functional (meth)acrylate include bifunctional (meth)acrylates such as triethylene glycol di(meth)acrylate, tetraethylene glycol di(meth)acrylate, polyethylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, dimethylol-tricyclodecane di(meth)acrylate, bisphenol A-PO adduct di(meth)acrylate, neopentyl glycol hydroxypivalate di(meth)acrylate, polytetramethylene glycol di(meth)acrylate, polyethylene glycol diacrylate, and tripropylene glycol diacrylate; trifunctional (meth)acrylates such as trimethylolpropane tri(meth)acrylate and pentaerythritol tri(meth)acrylate; three or more functional (meth)acrylates such as pentaerythritol tetra(meth)acrylate, dipentaerythritol hexa(meth)acrylate, ditrimethylolpropane tetra(meth)acrylate, glycerin propoxy tri(meth)acrylate, and pentaerythritolethoxytetra(meth)acrylate; a (meth)acryloyl group-containing oligomer such as a polyester acrylate oligomer; and modification products thereof. Examples of the above-described modification product include an ethylene oxide-modified (EO-modified) acrylate in which an ethylene oxide group is introduced, and a propylene oxide-modified (PO-modified) acrylate in which propylene oxide is introduced.

At least a part of the above-described active ray-curable compound used in the present invention is preferably an ethylene oxide-modified (meth)acrylate. This is because the ethylene oxide-modified (meth)acrylate has a high photosensitivity. Also because, in ink containing a gelling agent, when the ink forms a gel at a low temperature, the ink readily forms a card-house structure. In addition, the ethylene oxide-modified (meth)acrylate compound is easily dissolved in other ink components at a high temperature, and experiences small cure shrinkage, and thus curling of a printing material does not easily occur.

Further, an active ray-curable ink according to the present invention contains a two or more functional radical polymerizable active ray-curable compound in an amount of 50.0 mass% or more with respect to the total mass of the ink. When the ink contains a two or more functional radical polymerizable active ray-curable compound, the crosslink density of an obtained cured film can be increased, and thus migration can be suppressed. In addition, the number of sites for reaction with radicals produced by, for example, the compound (A) represented by the structural formula (1) and the compound (B) having a thioxanthone skeleton can be increased, and thus curing sensitivity of the ink can be increased.

The active ray-curable ink may contain a monofunctional radical polymerizable active ray-curable compound in addition to the two or more functional radical polymerizable active ray-curable compound. However, the content of the monofunctional radical polymerizable active ray-curable compound is preferably 0.0 mass% or more and 30.0 mass% or less with respect to the total mass of the active ray-curable ink, and more preferably 0.0 mass% or more and 10 mass% or less. When the content of the monofunctional radical polymerizable active ray-curable compound is 30.0 mass% or less with respect to the total mass of the active ray-curable ink, the proportion of the a monofunctional monomer is not excessive with respect to the proportion of the polyfunctional monomer, and thus decrease in the crosslink density can be reduced and migration can be prevented.

### 1-5. Coloring Material

A coloring material includes a pigment and a dye. From the view point of further improving dispersion stability of ink and forming an image having a high weather resistance, the coloring material is preferably a pigment.

Examples of the pigment include the following organic pigments and inorganic pigments listed in color index.

Examples of red or magenta pigments include Pigment Reds 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, and 257; Pigment Violets 3, 19, 23, 29, 30, 37, 50, and 88; and Pigment Oranges 13, 16, 20, and 36.

Examples of blue or cyan pigments include Pigment Blues 1, 15, 15:1, 15:2, 15:3, 15:4, 15:6, 16, 17-1, 22, 27, 28, 29, 36, and 60.

Examples of green pigments include Pigment Greens 7, 26, 36, and 50.

Examples of yellow pigments include Pigment Yellows 1, 3, 12, 13, 14, 17, 34, 35, 37, 55, 74, 81, 83, 93, 94, 95, 97, 108, 109, 110, 137, 138, 139, 153, 154, 155, 157, 166, 167, 168, 180, 185, and 193.

Examples of black pigments include Pigment Blacks 7, 26, and 28.

Examples of the dye include various oil-soluble dyes.

The content of a pigment or a dye is 0.1 mass% or more and 15.0 mass% or less with respect to the total mass of the ink, preferably 0.1 mass% or more and less than 10.0 mass%, and more preferably 0.1 mass% or more and 8.0 mass% or less. When the content of a pigment or a dye is 0.1 mass% or more with respect to the total mass of the ink, color development of an obtained image becomes sufficient. When the content of a pigment or a dye is 15.0 mass% or less with respect to the total mass of the ink, the viscosity of the ink does not become too high, and the ink can be stably ejected toward a recording medium.

### 1-6. Dispersant

The above-described pigment may be dispersed in a dispersant.

Examples of the dispersant include a surfactant and a polymer dispersant, and is preferably a polymer dispersant.

Examples of the polymer dispersant include (meth)acryl resins, a styrene/(meth)acryl resin, a hydroxyl group-containing carboxylic ester, a salt of long-chain polyaminoamide and macromolecular acid ester, a salt of a macromolecular polycarboxylic acid, a salt of long-chain polyaminoamide and polar acid ester, a macromolecular unsaturated acid ester, modified polyurethane, modified polyacrylate, a polyether ester type anionic activator, a naphthalenesulfonate formaldehyde condensate, an aromatic sulfonate formaldehyde condensate, a polyoxyethylene alkylphosphate, polyoxyethylene nonylphenyl ether, stearylamine acetate, and a pigment derivatives.

The dispersibility of the pigment may be increased by a dispersing aid, if necessary.

The content of the dispersant is preferably 10.0 mass% or more and 200.0 mass% or less with respect to the total mass of a pigment. When the content of the dispersant is 10.0 mass% or more with respect to the total mass of a pigment, dispersion stability of the pigment becomes higher. When the content of the dispersant is 200.0 mass% or less with respect to the total mass of a pigment, ejection properties of ink ejected from an inkjet head tend to be stabilized.

### 1-7. Gelling Agent

The active ray-curable ink may contain a gelling agent.

The gelling agent is an organic material which is solid at normal temperature, and liquefied by heating, and therefore can cause an active ray-curable ink to experience sol-gel phase transition by changing in temperature.

Further, from the following viewpoint, the gelling agent preferably crystallizes in ink at a temperature that is lower than the gelation temperature of the ink. Herein, "gelation temperature" refers to a temperature at which sol-gel phase transition of solated or liquefied ink, which is produced by heating, occurs during cooling, and the ink experiences a sudden change in viscosity. Specifically, when a solated or liquefied ink is cooled while the viscosity is measured by a rheometer "MCR 302" (Anton Paar GmbH), a temperature at which viscosity of the ink suddenly increases can be designated as the gelation temperature of the ink.

When the gelling agent crystallizes in ink, a structure in which an active ray-curable compound is included in a three dimensional space formed by a crystallized gelling agent having a plate shape (hereinafter, this structure is referred to as a "card-house structure") may be formed. When the card-house structure is formed, the active ray-curable compound in the liquid state is retained in the above-described space. Thus, an ink dot formed by landing of the ink becomes less spreadable, and the pinning property of the ink is further improved. When the pinning property of the ink is improved, unification of dots formed by landing of the ink on a recording medium becomes difficult.

Examples of the above-described gelling agent include aliphatic ketone compounds such as dipentadecyl ketone, diheptadecyl ketone, dilignoceryl ketone, dibehenyl ketone, distearyl ketone, dieicosyl ketone, dipalmityl ketone, dimyristyl ketone, lauryl myristyl ketone, lauryl palmityl ketone, myristyl palmityl ketone, myristyl stearyl ketone, myristyl behenyl ketone, palmityl stearyl ketone, palmityl behenyl ketone, and stearyl behenyl ketone; aliphatic ester compounds such as cetyl palmitate, stearyl stearate, behenyl behenate, icosyl icosanoate, behenyl stearate, palmityl stearate, lauryl stearate, stearyl palmitate, myristyl myristate, myristate cetyl, octyldodecyl myristate, stearyl oleate, stearyl erucate, stearyl linoleate, behenyl oleate, and arachidyl linoleate; amide compounds such as N-lauroyl-L-glutamic acid dibutylamide and N-(2-ethylhexanoyl)-L-glutamic acid dibutylamide; dibenzylidene sorbitols such as 1,3:2,4-bis-O-benzylidene-D-glucitol; petroleum-based wax such as paraffin wax, microcrystalline wax, and petrolatum; botanical wax such as candelilla wax, carnauba wax, rice wax, sumac wax, jojoba oil, jojoba solid wax, and jojoba ester; animal wax such as beeswax, lanolin, and spermaceti wax; mineral-based wax such as montan wax and hydrogenated wax; hydrogenated castor oils or hydrogenated castor oil derivatives; modified wax such as montan wax derivatives, paraffin wax derivatives, microcrystalline wax derivatives, or polyethylene wax derivatives; higher fatty acids such as behenic acid, arachidic acid, stearic acid, palmitic acid, myristic acid, lauric acid, oleic acid, and erucic acid; higher alcohols such as stearyl alcohol and behenyl alcohol; hydroxy stearic acids such as 12-hydroxy stearic acid; 12-hydroxystearic acid derivatives; fatty acid amides such as lauric acid amide, stearylamide, behenic acid amide, oleic acid amide, erucic acid amide, ricinoleic acid amide, and 12-hydroxystearic acid amide; N-substituted fatty acid amides such as N-stearylstearylamide and N-oleylpalmitic acid amide; special fatty acid amides such as N,N'-ethylenebisstearylamide, N,N'-ethylenebis-12-hydroxystearylamide, and N,N'-xylylenebisstearylamide; higher amines such as dodecylamine, tetradecylamine, or octadecylamine; fatty acid ester compounds such as stearyl stearate, oleyl palmitate, glycerin fatty acid ester, sorbitan fatty acid ester, propylene glycol fatty acid ester, ethylene glycol fatty acid ester, and polyoxyethylene fatty acid ester; sucrose fatty acid esters such as sucrose stearate and sucrose palmitate; synthetic wax such as polyethylene wax and α-olefin/maleic anhydride copolymer wax; polymerizable wax; dimer acids; and dimer diols. The above-described wax may be used alone, or in combination of two or more.

The content of the gelling agent is preferably 0.01 mass% or more and 10.0 mass% or less with respect to the total mass of the ink, and more preferably 0.2 mass% or more and 7.0 mass% or less with respect to the total mass of the ink. When the content of the gelling agent is within the above-described range, the pinning property of the ink can be sufficiently improved, and an image with a higher definition can be formed. Further, when a gelling agent is contained, after landing, the gelling agent is deposited on the surface of the ink, and the deposited gelling agent suppresses inhibition by oxygen when the ink is irradiated with active rays (ultraviolet rays). Thus, curing properties can be improved.

### 1-8. Polymerization inhibitor

The above-described active ray-curable ink may optionally contain a polymerization inhibitor.

Examples of the polymerization inhibitor include an (alkyl) phenol, hydroquinone, catechol, resorcin, p-methoxyphenol, t-butylcatechol, t-butylhydroquinone, pyrogallol, 1,1-picrylhydrazyl, phenothiazine, p-benzoquinone, nitrosobenzene, 2,5-di-t-butyl-p-benzoquinone, dithiobenzoyl disulfide, picric acid, cupferron, aluminum N-nitrosophenylhydroxylamine, tri-p-nitrophenylmethyl, N-(3-oxyanilino-1,3-dimethylbutylidene)aniline oxide, dibutylcresol, cyclohexanone oxime cresol, guaiacol, o-isopropylphenol, butylaldoxime, methyl ethyl ketoxime, and cyclohexanone oxime.

### 1-9. Other Ingredients

The above-described active ray-curable ink may further contain, if necessary, other ingredients. Examples of the above-described other ingredients include a photopolymerization initiator other than the compound (A) represented by the structural formula (1) or the compound (B) having a thioxanthone skeleton, a cationic active ray-curable compound, a photo-acid-generating agent, various additives, other resins, or the like. Examples of the additives include a surfactant, a leveling additive, a matting agent, an infrared absorber, an antifungal agent, a basic compound for improving storage stability of the ink. Examples of the basic compound include basic organic compounds such as a basic alkali metal compound, a basic alkaline earth metal compound, and amine. Examples of the above-described resins include resins for regulating physical properties of a cured film, such as polyester resins, polyurethane resins, vinyl resins, acryl resins, and rubber resins.

### 1-10. Physical Properties of Active Ray-curable Ink

An active ray-curable ink according to the present invention preferably has a viscosity of, from the viewpoint of further improving ejection properties of ink ejected from an inkjet head, 3 mPa·s or more and 20 mPa·s or less at a temperature of the inkjet head at the time of ejection. The temperature of an inkjet head may be about 50°C when the active ray-curable ink does not contain a gelling agent, and the temperature of an inkjet head may be about 80°C when the active ray-curable ink contains a gelling agent.

### 1-11. Method for Preparing Ink

The above-described active ray-curable ink may be prepared by mixing the active ray-curable compound, the compound (A) represented by the structural formula (1), the compound (B) having a thioxanthone skeleton, the compound (C), a coloring material, and other optional ingredients with heating. The resulting mixture is preferably filtered by a specified filter.

When an ink containing a pigment is prepared, it is preferred that a pigment dispersion containing a pigment and an active ray-curable compound is prepared, and thereafter the pigment dispersion is mixed with other ingredients. The pigment dispersion may further contain a dispersant.

The pigment dispersion can be prepared by dispersing a pigment in an active ray-curable compound. The pigment may be dispersed using, for example, a ball mill, a sand mill, attritor, a rolling mill, an agitator, a Henschel mixer, a colloid mill, an ultrasonic homogenizer, a Perl Mill, a wet-jet mill, and a paint shaker. In this case, dispersant may be added.

### 2. Image Forming Method

An image forming method according to another embodiment of the present invention is an image forming method using the above-described active ray-curable ink for ink jet. Specifically, the image forming method according to the present invention is an image forming method including a step of ejecting a droplet of the above-described active ray-curable ink for ink jet from an inkjet head, and causing the ejected active ray-curable ink for ink jet to be landed on the surface of a recording medium, and a step of irradiating the above-described active ray-curable ink for ink jet landed and provided on the recording medium with active rays.

In the step of ejecting an active ray-curable ink and causing the ejected ink to be landed on the surface of a recording medium, the above-described active ray-curable ink is ejected from an inkjet head.

When a multicolored image is formed by ejecting droplets of two or more kinds of the active ray-curable inks with different compositions (e.g., types or amounts of coloring materials) from each other and causing the inks to be landed, at least one of the two or more kinds of active ray-curable inks is the above-described active ray-curable ink. It is preferred that two or more kinds of inks among the ejected active ray-curable inks are the above-described active ray-curable inks (droplets of the above-described two or more kinds of active ray-curable inks with different compositions from each other are ejected and land on a recording medium). From the above-described viewpoint, all of the ejected active ray-curable ink are preferably the above-described active ray-curable ink.

The inkjet head may be any of an on-demand type and a continuous type inkjet head. Examples of the on-demand type inkjet head include electromechanical conversion type inkjet heads such as a single cavity type, a double cavity type, a bender type, a piston type, a share-mode type, and a shared wall type inkjet head, and mechanoelectric conversion type inkjet heads such as a thermal inkjet type and a bubble jet type inkjet head ("bubble jet" is a registered trademark of Canon Inc.).

The inkjet heads may be any of a scan type and a line type inkjet head.

To improve ink droplet-ejection properties, an active ray-curable ink in an inkjet head is heated to 40 to 120°C, and then the heated active ray-curable ink is ejected. From the viewpoint of ejection stability, at a temperature in the inkjet head, the active ray-curable ink has a viscosity of 3 mPa·s or more and less than 20 mPa·s.

When the above-described active ray-curable ink for ink jet contains a gelling agent, the temperature of the active ray-curable ink in an inkjet head is preferably regulated to a temperature higher than the gelation temperature of the active ray-curable ink by 10°C or more and less than 40°C. When the temperature of active ray-curable ink in an inkjet head is at least 10°C higher than the gelation temperature, the active ray-curable ink does not form a gel in the inkjet head or the surface of a nozzle, and the active ray-curable ink can be favorably ejected. When the temperature of the active ray-curable ink in an inkjet head is at most 40°C higher than the gelation temperature of the active ray-curable ink, thermal load of the inkjet head can be reduced. In particular, in an inkjet head using a piezoelectric element, performance of the inkjet head can be easily decreased by thermal load, and therefore it is particularly preferred that the temperature of the active ray-curable ink is regulated within the above-described range.

The above-described ejected active ray-curable ink is landed on the surface of a recording medium.

The recording medium may be any medium as long as an image can be formed by an inkjet method. Examples of the recording medium include absorptive media such as coated paper including art paper, coated paper, lightweight coated paper, slightly coated paper, and cast-coated paper, and uncoated paper; nonabsorptive recording media composed of plastics including polyester, polyvinyl chloride, polyethylene, polyurethane, polypropylene, an acryl resin, polycarbonate, polystyrene, an acrylonitrile-butadiene-styrene copolymer, polyethylene terephthalate, and polybutadiene terephthalate; and nonabsorptive inorganic recording media such as an intermediate transfer body, and metals and glass. As various plastic films, for example, a PP film, a PET film, an OPS film, an OPP film, an ONy film, a PVC film, a PE film, and a TAC film may be used. As other plastics, polycarbonate, an acryl resin, ABS, polyacetal, PVA, rubbers, and the like can be used. The ink can be also applied to metals and different types of glass. The inventive ink is suitable for coated paper having a relatively high gloss because the inventive ink can form an image glossier than an image formed by a conventional ink.

When the above-described active ray-curable ink for ink jet contains a gelling agent, the active ray-curable ink landed on a recording medium experiences pinning caused by crystallization of the gelling agent. Accordingly, a dot formed by landing of the ink becomes less spreadable, and unification of dots formed by landing of the ink on a recording medium or an intermediate transfer body is prevented.

In this case, to further improve the pinning property of the ink, the surface temperature of a recording medium may be around, or equal to or lower than the gelation temperature of the gelling agent.

In a step of irradiating with active rays, the surface of the above-described active ray-curable ink for ink jet landed on the surface of the above-described recording medium is irradiated with active rays from a light source with an emission wavelength of 385 nm or more and 420 nm or less.

Examples of the active rays include electron rays, ultraviolet rays, alpha rays, gamma rays, and X rays. From the viewpoint of easy handling and a smaller influence on the human body, irradiation with ultraviolet rays is preferred. From the viewpoint of efficiently curing an active ray-curable ink, irradiation with electron rays is preferred. From the viewpoint of reducing insufficient curing of an active ray-curable ink due to melting of the active ray-curable ink by radiant heat from a light source, the light source of ultraviolet rays is preferably a light emitting diode (LED). Examples of the LED light source which can radiate active rays for curing the ink include a 395 nm LED, a water-cooled LED, an LED manufactured by Phoseon Technology, an LED manufactured by Heraeus, an LED manufactured by KYOCERA Corporation, an LED manufactured by HOYA CORPORATION, and an LED manufactured by Integration Technology Co., Ltd.

When the active rays are ultraviolet rays, for example, the energy of the radiated active rays is preferably 200 mJ/cm² or more and 1000 mJ/cm² or less. When the energy is 200 mJ/cm² or more, an active ray-curable compound can be sufficiently polymerized and crosslinked. When the energy is 1000 mJ/cm² or less, decrease in a pinning property due to remelting of a gelling agent by heat of the radiated active rays can be reduced. From the above-described viewpoints, the energy of the radiated active rays is preferably 300 mJ/cm² or more and 800 mJ/cm² or less, and more preferably 350 mJ/cm² or more and 500 mJ/cm² or less.

In the step of irradiating with active rays, the irradiation is preferably performed in an atmosphere with oxygen concentration of 0.1 vol% or more and 10.0 vol% or less. When irradiation with active rays is performed in an atmosphere with low oxygen concentration, inhibition of curing by oxygen in the atmosphere can be suppressed, and thus the curing sensitivity of the above-described active ray-curable ink for ink jet can be further increased.

In the above-described image forming method, a method for forming an image by causing the above-described active ray-curable ink for ink jet to be landed on a recording medium, and irradiating the active ray-curable ink provided on the recording medium with active rays is described, but the present invention is not limited thereto. For example, an image may be formed by causing the above-described active ray-curable ink for ink jet to be landed on the surface of an intermediate transfer body, transferring the active ray-curable ink for ink jet provided on the intermediate transfer body to a recording medium, and irradiating the active ray-curable ink for ink jet transferred onto the recording medium with active rays. The intermediate transfer body may be any publicly known intermediate transfer body as long as it is used for forming an image by an inkjet method.

### 3. Image Forming Apparatus

An image forming apparatus according to another embodiment of the present invention includes an inkjet head, a transport pathway, and an active ray irradiator.

Fig. 1 is a schematic illustration showing an example of a configuration of an image forming apparatus 100 for an inkjet according to an embodiment of the present invention. As shown in Fig. 1, the image forming apparatus 100 includes an inkjet head 110, a transport pathway 120, an active ray irradiator 130 which radiates active rays toward an active ray-curable ink, a temperature controller 140, and an oxygen concentration controller 150 which controls oxygen concentration during irradiation of an active ray-curable ink with active rays. In Fig. 1, arrow A indicates a transport direction of a recording medium 160. The inkjet head 110, the oxygen concentration controller 150, and the active ray irradiator 130 are in contact with the transport pathway 120 and arranged in this order from the upstream side to the downstream side along the transport direction of a recording medium.

Image forming apparatuses of an active ray-curing type ink jet system include a line recording type (a single pass recording type) and a serial recording type ink jet system. Although any one of these types can be selected according to a required resolution of an image and a required recording rate, from the viewpoint of a highspeed recording, a line recording type (a single pass recording type) is preferred.

Specifically, an image forming apparatus 100 according to the present embodiment is an image forming apparatus including an ink ejection part for ejecting an ink from an inkjet head 110, a transport pathway 120 for transporting a recording medium 160 on which an ejected active ray-curable ink is to be landed and causing the ejected active ray-curable ink to be landed on the surface of the recording medium 160, an active ray irradiator 130 for irradiating the active ray-curable ink landed and provided on the recording medium 160 with active rays, a temperature controller 140 for maintaining the recording medium at a predetermined temperature, and an oxygen concentration controller 150 for controlling oxygen concentration during irradiation with active rays.

As shown in Fig. 1, the image forming apparatus 100 further includes a head carriage 170 for accommodating the inkjet head 110 for an active ray-curable ink, an ink flow path 180 connected with the head carriage 170, and an ink tank 190 for storing an ink supplied through the ink flow path 180.

Each of the head carriages 170 accommodates each of the inkjet heads 110. The head carriages 170 accommodate inkjet heads for different colors including yellow (Y), magenta (M), cyan (C), and black (K). For example, the head carriages 170 are fixed and arranged so as to cover the total width of the recording medium 160.

The inkjet head 110 is configured such that an ink is supplied from the ink tank 190.

The number of the inkjet heads 110 which are arranged in the transport direction A of the recording medium 160 is set depending on the nozzle density of the inkjet heads 110 and resolution of an image to be printed. For example, when an image having a resolution of 1440 dpi should be formed by using inkjet heads 110 each ejecting a droplet having a volume of 2 pl and having a nozzle density of 360 dpi, four inkjet heads 110 may be arranged such that the ink jet heads 110 are not overlapped with each other with respect to the transport direction A of the recording medium 160. When an image having a resolution of 720 × 720 dpi should be formed by using inkjet heads 110 each ejecting a droplet having a volume of 6 pl and having a nozzle density of 360 dpi, four inkjet heads 110 may be arranged in a tiled manner. The unit dpi refers to the number of ink droplets (dots) per inch (2.54 cm).

The ink tank 190 is connected to the head carriage 170 through the ink flow path 180. The ink flow path 180 is a pathway for supplying an ink in the ink tank 190 to the head carriage 170. For stable ejection of ink droplets, it is preferred that the ink in the ink tank 190, in the ink flow path 180, in the head carriage 170, and in the inkjet head 110 is heated to a predetermined temperature.

The active ray irradiators 130 cover the total width of the recording medium 160, and are each arranged at the downstream side of the head carriage 170 with respect to the transport direction A of the recording medium 160. The active ray irradiator 130 irradiates ink droplets of the active ray-curable ink each ejected from the inkjet head 110 and provided on the recording medium 160 with light (e.g., ultraviolet rays) to cure the ink droplets.

The temperature controller 140 is arranged on the lower surface of the recording medium 160 and maintains the recording medium 160 at a predetermined temperature. The temperature controller 140 may be, for example, a variety of different types of heaters, or the like.

The image forming apparatus 100 may further include the oxygen concentration controller 150 for controlling oxygen concentration during the above-described irradiation with active rays. The oxygen concentration controller 150 controls oxygen concentration of atmosphere surrounding the surface of ink droplets of the active ray-curable ink provided on the recording medium 160 during irradiation with light (e.g., ultraviolet rays) by the active ray irradiator 130.

The oxygen concentration controller 150 may have a configuration including an exhaust pipe 151 which is connected to an external air exhauster or the like and capable of sucking and exhausting gas around the surface of a recording medium, and a supply pipe 152 which is provided at the downstream side of the exhaust pipe 151, and connected to an apparatus such as a nitrogen gas producer producing gas with a low oxygen concentration and capable of supplying the gas with a low oxygen concentration to the vicinity of the surface of the recording medium. The amount of displacement from the exhaust pipe 151 and the amount of gas supply from the supply pipe 152 can be controlled so that oxygen concentration of the atmosphere may be a desired concentration within 0.1 vol% or more and 10.0 vol% or less. Although the exhaust pipe 151 and the supply pipe 152 are arranged side by side in the configuration in Fig. 1, the exhaust pipe and the supply pipe can be apart from each other as long as oxygen concentration can be controlled within the above-described range. The supply pipe 152 is preferably placed near the active ray irradiator 130, and, for example, may be disposed contiguous to the irradiator 130.

Further, the oxygen concentration controller 150 may have a configuration having no exhaust pipe 151 and having the supply pipe 152 only as long as oxygen concentration of the atmosphere can be controlled to a desired concentration within the above-described range of 0.1 vol% or more and 10.0 vol% or less.

Although the image forming apparatus causes an active ray-curable ink ejected from the inkjet head 110 to be directly landed on the recording medium 160 in the present embodiment, the image forming apparatus may have a configuration for causing an active ray-curable ink ejected from the inkjet head 110 to be landed on an intermediate transfer body, transferring the landed active ray-curable ink from the intermediate transfer body to a recording medium, and then irradiating the transferred active ray-curable ink with active rays.

### EXAMPLES

The present invention is described more specifically with reference to tests provided below, but the present invention is not limited to the tests.

### 1. Preparation of Ink for Ink Jet

### 1-1. Preparation of Black Dispersion 1

A stainless steel beaker was charged with 71.0 mass% of tripropylene glycol diacrylate and 9.0 mass% of a dispersant (AJISPER PB824: manufactured by Ajinomoto Fine-Techno Co., Inc., wherein "AJISPER" is a registered trademark of Ajinomoto Co., Inc.), and the contents were heated and stirred for 1 hour on a hot plate at 65°C.

The resulting solution was cooled to room temperature, and then 20.0 mass% of a black pigment (Pigment Black #52 manufactured by Mitsubishi Chemical Corporation) was added to the solution. A glass bottle was charged with the resulting mixture together with 200 g of zirconia beads each having a diameter of 0.5 mm, hermetically sealed, and the contents were subjected to a dispersion treatment using a paint shaker for 5 hours. The zirconia beads were removed from the resulting dispersion to afford a black dispersion 1.

### 1-2. Preparation of black dispersion 2

A stainless steel beaker was charged with 51.0 mass% of tripropylene glycol diacrylate and 9.0 mass% of a dispersant "AJISPER PB824", and the contents were heated and stirred for 1 hour on a hot plate at 65°C.

The resulting solution was cooled to room temperature, and then 40.0 mass% of a black pigment (Pigment Black #52) was added to the solution. A glass bottle was charged with the resulting mixture together with 200 g of zirconia beads each having a diameter of 0.5 mm, hermetically sealed, and the contents were subjected to a dispersion treatment using a paint shaker for 5 hours. The zirconia beads were removed from the resulting dispersion to afford a black dispersion 2.

### 1-3. Preparation of Ink

According to ink compositions shown in Table 1, components and black dispersions were mixed, and the mixture was heated to 80°C and stirred. In the heated state, the mixture was filtered using a 3 µm Teflon (registered trademark) membrane filter (manufactured by ADVANTEC) to obtain an ink 1. In Table 1, the content of each component has been rounded, and the amount of polyethylene glycol #400 diacrylate was adjusted so that the total amount of each ink accounted for 100 mass%.

Further, as shown in Table 1, as the compound (A) represented by the structural formula (1), which was one of the above-described ink components, Irgacure 819 (T₁: 55.5 kcal/mol) was used. As the compound (B) having a thioxanthone skeleton, Speedcure ITX(T₂: 61.4 kcal/mol) was used.

As shown in Table 1, as the compounds (C), each of which was one of the above-described ink components, Speedcure PBZ (T₃: 60.7 kcal/mol), Speedcure BMS (T₃: 61.0 kcal/mol), and Irgacure TPO (T₃: 60.0 kcal/mol) were used. As the compound (D), Speedcure BP (T₃: 69.1 kcal/mol) was used.

As shown in Table 1, as gelling agents, each of which was one of the above-described ink components, highly pure solid ester wax (Nissan Electrol WEP-2 manufactured by NOF CORPORATION, wherein "Nissan Elector" is a registered trademark of this company) and glycol distearate (EMALEX EG-di-S manufactured by NIHON EMULSION Co., Ltd., wherein "EMALEX" is a registered trademark of this company) were used.

As shown in Table 1, as two or more functional active ray -curable compounds, each of which was one of the above-described ink components, polyethylene glycol #400 diacrylate (PEG 400DA) and tripropylene glycol diacrylate (TPGDA) were used. In inks 3, 4, and 11, as a monofunctional active ray-curable compound, tetrahydrofurfuryl acrylate (TFA) was used together.

The content (unit: mass%) of each component in inks 1 to 14 is shown in Table 1.

Abbreviations used in Table 1 are as follows.
TFA: tetrahydrofurfuryl acrylate
PEG 400DA: polyethylene glycol #400 diacrylate
TPGDA: tripropylene glycol diacrylate
819: Irgacure 819
ITX: Speedcure ITX
PBZ: Speedcure PBZ
BMS: Speedcure BMS
TPO: Irgacure TPO
BP: Speedcure BP
WEP-2: Nissan Electrol WEP-2
EG-di-S: EMALEX EG-di-S

**[Table 1]**

| | | | Ink | | | | | | | | | | | | | |
|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 |
| Pigment dispersion | Black dispersion 1 | | 25.0 | 25.0 | 25.0 | 25.0 | 25.0 | 25.0 | 25.0 | 25.0 | 25.0 | 25.0 | 25.0 | 25.0 | 25.0 | |
| | Black dispersion 2 | | | | | | | | | | | | | | | 50.0 |
| Active ray-curable compound | Monofunctional | TFA | | | 10.0 | 10.0 | | | | | | | 50.0 | | | |
| | Bifunctional | PEG400DA | 35.0 | 35.0 | 40.0 | 40.0 | 35.0 | 35.5 | 35.5 | 33.5 | 33.5 | 36.0 | 0.0 | 34.0 | 35.5 | 10.0 |
| | | TPGDA | 35.0 | 35.0 | 20.0 | 20.0 | 35.0 | 35.0 | 35.0 | 35.0 | 35.0 | 35.0 | 20.0 | 35.0 | 35.0 | 35.0 |
| Photopolymerization initiator | Compound (A) | 819 | 2.0 | 2.0 | 2.0 | 2.0 | 2.0 | 2.0 | 2.0 | 2.0 | 2.0 | 2.0 | 2.0 | 2.0 | 2.0 | 2.0 |
| | Compound (B) | ITX | 2.0 | 2.0 | 2.0 | 2.0 | 2.0 | 2.0 | 2.0 | 2.0 | 2.0 | 2.0 | 2.0 | 2.0 | 2.0 | 2.0 |
| Other compounds | Compound (C) | PBZ | 1.0 | | 1.0 | | | 0.5 | | 0.5 | | | 1.0 | 2.0 | | 1.0 |
| | | BMS | | 1.0 | | 1.0 | | | 0.5 | | 0.5 | | | | | |
| | | TPO | | | | | 1.0 | | | | | | | | | |
| | Compound (D) | BP | | | | | | | | | | | | | 0.5 | |
| Gelling agent | WEP-2 | | | | | | | | | 2.0 | | | | | | |
| | EG-di-S | | | | | | | | | | 2.0 | | | | | |
| Total | | | 100.0 | 100.0 | 100.0 | 100.0 | 100.0 | 100.0 | 100.0 | 100.0 | 100.0 | 100.0 | 100.0 | 100.0 | 100.0 | 100.0 |

| | | | | | | | | | | | | | | | | |
|---|---|---|---|---|---|---|---|---|---|---|---|---|---|---|---|---|
| Unit: mass% | | | | | | | | | | | | | | | | |

### 2. Evaluation of ink

The following evaluations were carried out using the prepared inks 1 to 14.

### 2-1. Evaluation of Curing Properties

### (Test Method)

The inks 1 to 14 were introduced into an inkjet head from KONICA MINOLTA, INC. (KM 1048), and solid images (print density: 100%) each having a resolution of 720 × 720 dpi were printed. As a substrate for printing, OK TpoKote paper (basis weight: 128 g/m², manufactured by Oji Paper Co., Ltd.) was used, an LED lamp (manufactured by KYOCERA Corporation) was used as a UV irradiation light source, and the printed ink was irradiated with ultraviolet rays having an energy of 350 mJ/cm² to cure the ink.

### (Evaluation Method)

Among solid images formed by the above-described image forming method, the 10^{th} formed solid image was left to stand in an environment at 25°C and 60%RH for 24 hours. Then, pencil hardness of the surface of the solid image was measured according to JIS-K-5600.

### (Evaluation Criteria)

Evaluation was performed based on the following criteria. In the following evaluation, it was decided that Δ or above was adequate for practical applications.
⊙: Pencil hardness of 2H or higher
O: Pencil hardness of H
Δ: Pencil hardness of B or F
×: Pencil hardness of 2B or lower

### 2-2. Evaluation of migration

### (Test Method)

Using each of the inks 1 to 14, a discoidal solid image having a diameter of 10 cm was formed on OK TpoKote paper, a PET film and a CPP film each having a diameter of 10 cm were overlaid on the backside, and the paper was brought into contact with 100 mL of a liquid mixture (water : ethanol = 5 : 95). Next, to avoid volatilization of the liquid mixture, the test sample and the mixed liquid were kept in a metal well-closed container and left to stand at 60°C for 10 days.

### (Evaluation Method)

The test sample and the mixed liquid were left to stand for 10 days. Then, the mixed liquid was volatilized, and mass of the residual components was measured to calculate the total amount of components (e.g., a photopolymerization initiator, a fluorescent brightening agent, and an antioxidant) which were contained in the mixed liquid and derived from the printed material The amount of the components calculated above was designated as an amount of migration.

### (Evaluation Criteria)

Evaluation was performed based on the following criteria. In the following evaluation, it was decided that Δ or above was adequate for practical applications.
⊙: Amount of migration of less than 300 ppb
O: Amount of migration of 300 ppb or more and less than 500 ppb
Δ: Amount of migration of 500 ppb or more and less than 1000 ppb
× : Amount of migration of 1000 ppb or more

### 2-3. Evaluation of Ejection Properties

### (Test Method)

The inks 1 to 14 were introduced into an inkjet head from KONICA MINOLTA, INC. (KM1048), and 100 solid images (print density: 100%) each having a print width of 100 mm × 100 mm and a resolution of 720 × 720 dpi were successively printed. Then, successive ejections (operations) were performed under conditions including a volume per droplet of 3.5 pl, a speed of a droplet of 7.0 m/sec, an ejection frequency of 40 kHz, and a printing rate of 100%, and the number of dead nozzles of the head was counted.

### (Evaluation Method)

The number of dead nozzles of the head was counted by observing each and every nozzle using a stroboscopic camera (a magnification camera).

### (Evaluation Criteria)

Evaluation was performed based on the following criteria. In the following evaluation, it was decided that ○ or above was adequate for practical applications.
O: Dead nozzles were 10 or less.
× : Dead nozzles were 11 or more.

The results of the evaluations are shown in Table 2.

**[Table 2]**

| | Ink | | | | | | | | | | | | | | | |
|---|---|---|---|---|---|---|---|---|---|---|---|---|---|---|---|---|
| | 1 | 2 | 3 | 4 | 5 | 6 | 7 | 8 | | 9 | | 10 | 11 | 12 | 13 | 14 |
| | | | | | | | | A | B | A | B | | | | | |
| Curing properties | Δ | Δ | Δ | Δ | Δ | Δ | Δ | ○ | ⊙ | ○ | ⊙ | × | Δ | Δ | × | Δ |
| Migration | Δ | Δ | Δ | Δ | Δ | ○ | ○ | ○ | ⊙ | ○ | ⊙ | × | × | × | × | Δ |
| Ejection properties | ○ | ○ | ○ | ○ | ○ | ○ | ○ | ○ | ○ | ○ | ○ | ○ | ○ | ○ | ○ | × |
| Pigment concentration (%) | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 20.0 |
| Oxygen concentration (%) | 21.0 | 21.0 | 21.0 | 21.0 | 21.0 | 21.0 | 21.0 | 21.0 | 10.0 | 21.0 | 10.0 | 21.0 | 21.0 | 21.0 | 21.0 | 21.0 |

As shown in columns of inks 1 to 9, when a two or more functional active ray-curable compound was included in an amount of 50.0 mass% with respect to the total mass of the ink, and the compound (A), the compound (B) having a thioxanthone skeleton, and the compound (C) were used together, curing properties of the ink could be improved. The reason is thought to be that when the above-described compounds and the two or more functional active ray-curable compound are used in combination, reactivity with radicals produced by the above-described compounds is increased Further, as shown in columns of inks 8B and 9B, it was found that when oxygen concentration was 10% or less, a higher curability could be achieved. The reason is thought to be that when oxygen concentration is decreased, inhibition of polymerization of the compound (A), the compound (B) having a thioxanthone skeleton, and the compound (C) by oxygen can be suppressed.

As shown in columns of inks 1 to 9, it was found that when the total amount of the compound (A) represented by the structural formula (1) and the compound (B) having a thioxanthone skeleton was 5.0 mass% or less with respect to the total mass of the active ray-curable ink for ink jet, migration of the above-described compounds could be suppressed. The reason is thought to be that by using the compound (C) which has a triplet energy level between the triplet energy level of the compound (A) and the triplet energy level of the compound (B) having a thioxanthone skeleton, even when the triplet energy levels of the compound (A) and the compound (B) having a thioxanthone skeleton are apart from each other, the concurrently used compound (C), which has an energy level between energy levels of the compound (B) and compound (A), acts as a bridge for energy transfer from the compound (B) having a thioxanthone skeleton to the compound (A). It is thought that, accordingly, even when the total amount of the compound (A) and the compound (B) having a thioxanthone skeleton is small (i.e., 5.0 mass% or less), these compounds can perform their functions. Although the evaluation results of the inks 1 to 4 and the ink 5 are the same, the ink 5 is slightly inferior in curing properties and migration.

As shown in columns of inks 6 to 9, it was found that the compound (C) can exert the effect with a small amount (i.e., 0.5 mass% or less) as compared to the compound (A) and the compound (B) having a thioxanthone skeleton. The reason is thought to be that since 4-phenylbenzophenone and 4-(4'-methylphenylthio)benzophenone used as the compounds (C) do not absorb light having a wavelength around 385 nm, even when irradiated with ultraviolet rays, energy transfer between the compound (A) and the compound (B) having a thioxanthone skeleton can occur.

As shown in columns of inks 1 to 13, it was found that when the concentration of a pigment contained in the ink was 15.0 mass% or less, favorable ejection properties could be achieved as compared to the ink 14 having a pigment concentration of 20.0 mass%.

It is expected that an active ray-curable ink according to the present invention may provide broader applications of inkjet printing, and may contribute to progress and spread of the art.

Although embodiments of the present invention have been described and illustrated in detail, the disclosed embodiments are made for purposes of illustration and example only and not limitation. The scope of the present invention should be interpreted by terms of the appended claims.

## Claims

1. An active ray-curable ink for ink jet, comprising:
a compound (A) represented by the structural formula (1): 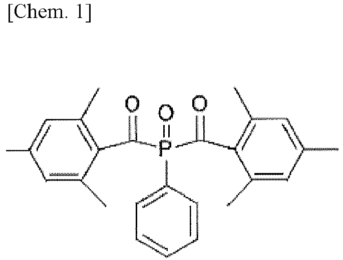
a compound (B) having a thioxanthone skeleton;
a compound (C) having a triplet energy level (T₃) between a triplet energy level (T₁) of the compound (A) represented by the structural formula (1) and a triplet energy level (T₂) of the compound (B) having a thioxanthone skeleton;
a two or more functional radical polymerizable active ray-curable compound; and
a coloring material, wherein
a content of the two or more functional radical polymerizable active ray-curable compound is 50.0 mass% or more with respect to the total mass of the active ray-curable ink for ink jet,
a content of the coloring material is 0.1 mass% or more and 15.0 mass% or less with respect to the total mass of the active ray-curable ink for ink jet, and
the total content of the compound (A) represented by the structural formula (1) and the compound (B) having a thioxanthone skeleton is 0.1 mass% or more and less than 5.0 mass% with respect to the total mass of the active ray-curable ink for ink jet.

2. The active ray-curable ink for ink jet according to claim 1, wherein a content of the compound (C) is 0.01 mass% or more and 1.0 mass% or less with respect to the total mass of the active ray-curable ink for ink jet.

3. The active ray-curable ink for ink jet according to claim 1 or 2, wherein the compound (C) is 4-phenylbenzophenone or 4-(4'-methylphenylthio)benzophenone.

4. The active ray-curable ink for ink jet according to any one of claims 1 to 3, further comprising a gelling agent.

5. An image forming method, comprising:
ejecting a droplet of the active ray-curable ink for ink jet according to any one of claims 1 to 4 from an inkjet head (110), and causing the ejected active ray-curable ink for ink jet to be landed on a surface of a recording medium (160) or an intermediate transfer body; and
irradiating the active ray-curable ink for ink jet landed and provided on the recording medium (160) with active rays.

6. The image forming method according to claim 5, wherein the irradiating the active ray-curable ink with active rays is irradiating the active ray-curable ink with the active rays from a light source with an emission wavelength of 385 nm or more and 420 nm or less.

7. The image forming method according to claim 5 or 6, wherein the irradiating the active ray-curable ink with active rays is irradiating the active ray-curable ink with the active rays in an atmosphere with oxygen concentration of 0.1 vol% or more and 10.0 vol% or less.
